# EUROPÄISCHE PATENTSCHRIFT

(11) **EP 1 866 053 B1**
(45) Veröffentlichungstag und Bekanntmachung des Hinweises auf die Patenterteilung: **28.11.2012**
(21) Anmeldenummer: 06723464.1
(22) Anmeldetag: 16.03.2006
(51) Int. Cl.: B01D 45/16

(54) **ÖLABSCHEIDER, LUFTAUFBEREITUNGSANLAGE UND DRUCKLUFTVERSORGUNGSANLAGE**
OIL SEPARATOR, AIR PURIFIER UNIT AND COMPRESSED AIR SUPPLY
SEPARATEUR D'HUILE, INSTALLATION DE TRAITEMENT D'AIR ET INSTALLATION D'ALIMENTATION EN AIR

(30) Priorität: 21.03.2005 DE 102005013473
(43) Veröffentlichungstag der Anmeldung: 19.12.2007
(73) Patentinhaber: KNORR-BREMSE Systeme für Nutzfahrzeuge GmbH, 80809 München (DE)
(72) Erfinder: MUSER, Michael, 85276 Pfaffenhofen (DE); RATATICS, Gábor, H-6000 Kecskémet (HU)
(74) Vertreter: Mattusch, Gundula
(86) Internationale Anmeldenummer: PCT/EP2006/002411
(87) Internationale Veröffentlichungsnummer: WO 2006/099989

(56) Entgegenhaltungen:
- EP-A1- 1 048 540
- WO-A-03/086585
- WO-A-2005/099871
- US-A- 3 680 283
- US-A- 4 572 725
- US-A- 5 002 593
- US-A- 5 427 609

## Beschreibung

Die Erfindung betrifft einen Ölabscheider für eine Luftaufbereitungsanlage eines Nutzfahrzeugs, wobei die Luftaufbereitungsanlage ein Ventilgehäuse mit mindestens einem Ausgangsanschluss für einen Druckluftverbraucher sowie eine Filtereinheit, die insbesondere dem Trocknen der dem Druckluftverbraucher zuzuführenden Druckluft dient, aufweist und der Ölabscheider eine Schnittstelle aufweist, über die er mit der Filtereinheit koppelbar ist

Die Erfindung betrifft ferner eine Luftaufbereitungsanlage sowie eine Druckluftversorgungsanlage.

Luftaufbereitungsanlagen dienen in erster Linie dazu, die von einem Kompressor gelieferte Druckluft zu entfeuchten, bevor diese den Druckluftverbrauchern, insbesondere einer Bremsanlage, zugeführt wird. Da die vom Kompressor gelieferte Luft verschmutzt ist, ist es erwünscht, diese zu reinigen, bevor sie der Filtereinheit zugeführt wird; auf diese Weise soll eine Verschmutzung der Filtereinheit verzögert werden. Die von dem Kompressor gelieferte Druckluft ist beispielsweise mit in dem Kompressor als Schmiermittel verwendetem Öl verschmutzt; weitere Verschmutzungen stammen beispielsweise aus der Atmosphäre. Es ist bekannt, zur Entfernung derartiger und anderer Verschmutzungen einen sogenannten Ölabscheider einzusetzen, den die Druckluft vor ihrem Eintritt in die Filtereinheit durchströmen muss.

Ein Beispiel für eine solche Reinigungseinrichtung ist in der US 6,071,321 angegeben. Die dort angegebenen oder in vergleichbarer Weise aufgebauten Ölabscheider arbeiten im Allgemeinen mit Hilfe der Zentrifugalkraft. Ein Luftstrom wird einer im Wesentlichen zylindrischen Kammer mit tangentialer Komponente zugeführt, so dass durch die Zentrifugalkraft von der Luft mitgeführte Partikel entsprechend ihrer höheren Masse nach außen getrieben werden, so dass sie sich letztlich an der Wand der Kammer abscheiden können. Die Partikel können dann am Boden der Kammer gesammelt und von dort abgeführt werden.

Generell ist man bestrebt, möglichst viele Funktionen, die eine Druckluftaufbereitungsanlage erfüllen muss, in wenige Komponenten zu integrieren. Demgemäß wurde in der US 6,071,321 bereits vorgeschlagen, den Ölabscheider an der Filtereinheit anzubauen.

Das Dokument US 4,572,725 beschreibt eine Lufttrocknervorrichtung mit einem in einem Gehäuse angeordneten Lufttrockner. Im Gehäuse des Lufttrockners ist ein Ölabscheider vorgesehen.

In dem Dokument US 5,002,593 wird eine Vorrichtung zum Trocknen komprimierter Luft vorgeschlagen. Es ist ein in einem Träger angeordneter Öldampffilter vorgesehen. Der Träger weist radial nach außen gerichtete Flügel auf, an denen sich Öltropfen und Wassertropfen ablagern können.

Das Dokument US 5,427,609 beschreibt eine Vorrichtung zum Entfernen von Verunreinigungen aus Druckluft für ein Lastfahrzeug. In einer Halterung ist ein röhrenförmiger Filter vorgesehen, um Öl aus durchströmender Druckluft zu entfernen. An der Halterung ist ein Druckablassventil vorgesehen.

Moderne Luftaufbereitungsanlagen des Standes der Technik erfüllen gemäß dem erwähnten Integrationswunsch zusätzlich zu den Aufgaben im Hinblick auf die Filterung der Druckluft weiterhin solche Aufgaben, die mit der Druckregelung und der Absicherung der Druckluftverbraucherkreise in Verbindung stehen. Insofern sind zentrale Komponenten einer Luftaufbereitungsanlage neben der Filtereinheit ein Druckregler und ein Mehrkreisschutzventil, wobei der Druckregler und das Mehrkreisschutzventil in einem Ventilgehäuse angeordnet sind. Eine weitergehende Integration von Komponenten, das heißt beispielsweise eines Ölabscheiders in der Luftaufbereitungsanlage würde sich im Rahmen einer Modifikation des ventilgehäuses anbieten. Allerdings sind derartige Modifikationen mit Nachteilen verbunden, da sie zusätzlichen Entwicklungsaufwand und eine Änderung bestehender Produktion- und Vertriebsstrategien erforderlich machen.

Der vorliegenden Erfindung liegt die Aufgabe zugrunde, einen Ölabscheider, eine Luftaufbereitungsanlage und eine Druckluftversorgungsanlage zur Verfügung zu stellen, so dass die Integration des Ölabscheiders in die Luftaufbereitungsanlage in besonders einfacher und zuverlässiger weise erfolgen kann, wobei insbesondere die Entnahme der im Ölabscheider gesammelten Verschmutzungen in die Funktionsabläufe der Luftaufbereitungsanlage integriert sein soll.

Diese Aufgabe wird mit den Merkmalen der unabhängigen Ansprüche gelöst.

Vorteilhafte Ausführungsformen der Erfindung sind in den abhängigen Ansprüchen angegeben.

Erfindungsgemäß wird ein Ölabscheider nach Anspruch 1 vorgeschlagen. Der Ölabscheider weist eine weitere Schnittstelle aufweist, über die er mit dem Ventilgehäuse koppelbar ist. Hierdurch kann der Ölabscheider so ausgelegt werden, dass er im Zusammenhang mit Luftaufbereitungsanlagen des Standes der Technik verwendet werden kann. Es ist vorgesehen, dass der Ölabscheider einen Anschluss aufweist, dem ungereinigte Druckluft, insbesondere zum Befüllen von Reifen, entnehmbar ist.

In dieser Hinsicht ist es besonders nützlich, dass der Ölabscheider sandwichartig zwischen dem Ventilgehäuse und der Filtereinheit angeordnet ist. Luftaufbereitungsanlagen des Standes der Technik weisen im Allgemeinen eine Filtereinheit auf, die über eine flanschartige Verbindung mit einem Ventilgehäuse gekoppelt ist. Indem der Ölabscheider nun so aufgebaut ist, dass er einerseits eine flanschartige Verbindung zur Filtereinheit und andererseits eine flanschartige Verbindung zum Ventilgehäuse zulässt, kann eine kompakte Luftaufbereitungsanlage mit integriertem Ölabscheider zur Verfügung gestellt werden.

Gemäß einer besonders vorteilhaften Ausführungsform der vorliegenden Erfindung ist vorgesehen, dass der Ölabscheider einen Eingangsanschluss aufweist, über den eine Druckluftquelle mit der Luftaufbereitungsanlage koppelbar ist. Herkömmlicherweise ist bei Luftaufbereitungsanlagen des Standes der Technik der Eingangsanschluss für die Druckluft am Ventilgehäuse angeordnet. Auf der Grundlage der Erfindung, unter Einbeziehung eines Eingangsanschlusses am Ölabscheider, kann die Druckluft auf kürzestem Weg direkt der Komponente der Luftaufbereitungsanlage zugeführt werden, in der die erste Verarbeitung der Druckluft erfolgt.

Weiterhin kann vorgesehen sein, dass der Ölabscheider einen Ausgangsanschluss aufweist. Dem Ölabscheider können auf diese oder vergleichbare Art und Weise zusätzliche Funktionen zugeordnet werden, die herkömmlich im Bereich des Ventilgehäuses vorzusehen sind.

In diesem Zusammenhang ist es möglich, dass der Ölabscheider einen Anschluss aufweist, dem ungereinigte Druckluft, insbesondere zum Befüllen von Reifen, entnehmbar ist und dem zu reinigende Druckluft zuführbar ist. Ein solcher Anschluss kann als Ausgangsanschluss nützlicherweise für alle Funktionen verwendet werden, bei dem in unproblematischer Weise mit ungereinigter Luft gearbeitet werden kann. Ebenfalls kann ein solcher Ausgangsanschluss als Prüfanschluss verwendet werden. Nutzt man den Anschluss als Eingangsanschluss, so kann hierüber Druckluft insbesondere von einer fahrzeugexternen Quelle zugeführt werden, die dann im Ölabscheider gereinigt wird.

Weiterhin weist der Ölabscheider ein Sicherheitsventil auf. Ein solches Sicherheitsventil kann im Hinblick auf eine Begrenzung des Systemdrucks ausgelegt sein; bei stark unterschiedlichen Druckverhältnissen innerhalb der Luftaufbereitungsanlage kann ebenfalls eine explizite Auslegung des Sicherheitsventils auf den maximalen im Ölabscheider zugelassenen Druck vorgesehen sein.

Gemäß einer besonders bevorzugten Ausführungsform ist die vorliegende Erfindung dadurch weitergebildet, dass der Ölabscheider einen ersten Raum aufweist, in den zu reinigende Druckluft einleitbar ist, wobei in dem ersten Raum Luftleitmittel angeordnet sind, durch die die Strömungsgeschwindigkeit der durchströmenden Luft änderbar ist, und dass der Ölabscheider einen zweiten Raum aufweist, dem in dem ersten Raum gereinigte Luft zuführbar ist und über den die gereinigte Luft der Filtereinheit zuführbar ist. Durch die Luftleitmittel kann die Abscheidung von Fremdpartikeln unterstützt werden. Indem die Druckluft mit wechselnden Geschwindigkeiten durch den Ölabscheider strömt, können frühzeitige Zusammenlagerungen derartiger Partikel erfolgen. Solche Zusammenlagerungen erhöhen die Masse der Partikel, was deren Transport an die Außenseite des Ölabscheiders aufgrund der Zentrifugalkraft begünstigt. Getrennt von dem mit den Luftleitmitteln ausgestatteten Raum ist ein weiterer Raum vorgesehen, über den die gereinigte Luft dann der Filtereinheit zugeführt werden kann; eine direkte Verbindung der Filtereinheit mit dem die Verunreinigungen führenden ersten Raum ist somit nicht erforderlich.

Es ist besonders bevorzugt, dass der erste Raum und der zweite Raum als im Wesentlichen axialsymmetrische Ringräume mit gemeinsamer Achse ausgelegt sind. Insofern durchströmt die zu reinigende Luft zunächst einen radial außenliegenden Ringraum, bevor sie in gereinigter Form über den radial innenliegenden Ringraum der Filtereinheit zugeführt wird.

Es ist besonders nützlich, dass die Druckluft dem ersten Raum mit tangentialer Komponente zuführbar ist. Die tangentiale Komponente innerhalb des ersten Raums ist erforderlich, um die Zentrifugalkraft für eine Abscheidung der Verunreinigungen auszunutzen. Wenngleich die tangentiale Komponente grundsätzlich allein durch die im ersten Raum angeordneten Luftleitmittel erzeugt werden kann, ist es doch nützlich, die Druckluft dem ersten Raum von vornherein mit tangentialer Komponente zuzuführen.

Im Hinblick auf die konstruktive Auslegung des erfindungsgemäßen Ölabscheiders ist insbesondere bevorzugt, dass die Luftleitmittel mehrere Luftleitelemente aufweisen, deren Hauptebenen an verschiedenen Axialkoordinaten angeordnet sind, dass die Luftleitelemente Luftführungsabschnitte aufweisen, die sich aus deren jeweiliger Hauptebene heraus erstrecken, und dass benachbarte Luftführungsabschnitte benachbarter Luftleitelemente nicht parallel sind. Derartige Luftleitelemente sind in einfacher Weise herzustellen, beispielsweise indem kreisringartige Elemente gestanzt werden und dann in entsprechender Weise gebogen werden. Durch die nicht parallele Anordnung benachbarter Luftführungsabschnitte entstehen auf dem im Wesentlichen spiralartigen Weg der Luft durch den ersten Raum Strömungsengpässe und solche Bereiche, in denen ein großer Strömungsquerschnitt zur Verfügung steht. Insofern ergeben sich Geschwindigkeitsänderungen, die in vorteilhafter Weise die Zusammenlagerung der Partikel begünstigen.

Nützlicherweise ist vorgesehen, dass der Winkel zwischen Luftführungsabschnitten und Hauptebenen zwischen 10 und 20 Grad, vorzugsweise 15 Grad beträgt.

Gemäß einer ebenfalls besonders bevorzugten Ausführungsform der vorliegenden Erfindung ist diese dadurch weitergebildet, dass die Luftleitelemente zumindest teilweise identisch ausgebildet sind, wobei die Nichtparallelität der Luftführungsabschnitte benachbarter Luftleitelemente durch eine relative Verdrehung der Luftleitelemente gegeneinander realisiert ist. Es ist demnach möglich, identische Luftleitelemente zu verwenden, was die Herstellung des Ölabscheiders besonders kostengünstig und zuverlässig gestaltet. Allein durch die relative Verdrehung der Luftleitelemente gegeneinander ist es möglich, die Strömungsquerschnitte auf dem Strömungsweg der Druckluft durch den ersten Raum zu variieren.

Es ist besonders bevorzugt, dass der Innendurchmesser der Luftleitelemente dem Außendurchmesser einer im Wesentlichen zylindrischen Wand entspricht, die den ersten Raum von dem zweiten Raum trennt. Auf diese Weise können die Luftleitelemente form- und/oder kraftschlüssig auf die zylindrische Wand aufgesetzt werden, wobei zusätzliche Befestigungsmittel zwischen den Luftleitelementen und der zylindrischen Wand vorgesehen sein können.

Es ist weiterhin besonders bevorzugt, dass der erste Raum einen Bodenbereich aufweist, in dem abgeschiedenes Öl gesammelt wird und an dem ein Ablass zur Entnahme des gesammelten Öls angeordnet ist. Das abgeschiedene Öl beziehungsweise, allgemeiner formuliert, die abgeschiedenen Verunreinigungen sammeln sich somit im ersten Raum an einer Stelle, von der aus das gesammelte Öl direkt abgelassen werden kann.

In diesem Zusammenhang ist es besonders nützlich, dass die im Wesentlichen zylindrische Wand im Bodenbereich des ersten Raums gestuft ausgebildet ist. Eine solche gestufte Ausbildung der zylindrischen Wand im Bodenbereich des ersten Raums verhindert ein Heraufkriechen des Öls innerhalb des ersten Raums beziehungsweise ein Herüberkriechen des Öls von dem ersten Raum in den zweiten Raum. Auf diese Weise wird eine erneute Verschmutzung der durch den zweiten Raum strömenden Druckluft vermieden.

Aus vergleichbaren Gründen ist vorgesehen, dass der Übergang zwischen dem ersten Raum und dem zweiten Raum durch mindestens ein in den ersten Raum hineinragendes Rohr gebildet ist, das an seiner Außenseite mindestens einen kragenartigen Fortsatz hat. Der kragenartige Fortsatz beziehungsweise die vorzugsweise mehreren kragenartigen Fortsätze verhindern ebenfalls ein Kriechen von Öl aus dem ersten in den zweiten Raum.

Die Erfindung betrifft weiterhin eine Luftaufbereitungsanlage mit einem erfindungsgemäßen Ölabscheider sowie eine Druckluftversorgungsanlage mit einer erfindungsgemäßen Luftaufbereitungsanlage.

Die erfindungsgemäße Druckluftversorgungsanlage ist in besonders bevorzugter Weise dadurch weitergebildet, dass der Ölabscheider einen Ablass aufweist, der zum Abführen von abgeschiedenen Substanzen mit einer Ablassöffnung des Ventilgehäuses gekoppelt ist. Gattungsgemäße Luftaufbereitungsanlagen weisen zur Regeneration der Filtereinheit eine Ablassöffnung auf. Zur Regeneration der Luftfiltereinheit durchströmt Luft aus dem Vorratsbehältern des Nutzfahrzeugs die Filtereinheit in umgekehrte Richtung, und die Luft verlässt die Luftaufbereitungsanlage dann über eine Ablassöffnung. Erfindungsgemäß kann nun vorgesehen sein, diese Ablassöffnung auch dazu zu verwenden, die im Ölabscheider abgeschiedenen Substanzen aus diesem zu entnehmen. Dabei ist unter Umständen sicherzustellen, dass die häufig im Hinblick auf die Umwelt problematischen Substanzen, die sich im Ölabscheider ansammeln, nicht ohne Weiteres in die Atmosphäre ausgeblasen werden.

Der Erfindung liegt die Erkenntnis zugrunde, dass durch geeignete Auslegung eines Ölabscheiders mit Schnittstellen eine Nachrüstung herkömmlicher Luftaufbereitungsanlagen möglich ist.

Die Erfindung wir nun mit Bezug auf die begleitenden Zeichnungen anhand besonders bevorzugter Ausführungsformen beispielhaft erläutert.

Dabei zeigen:
- Figur 1: eine perspektivische Darstellung einer erfindungsgemäßen Luftaufbereitungsanlage;
- Figur 2: eine Seitenansicht einer erfindungsgemäßen Luftaufbereitungsanlage;
- Figur 3: eine weitere Seitenansicht einer erfindungsgemäßen Luftaufbereitungsanlage;
- Figur 4: eine Draufsicht auf die Unterseite einer erfindungsgemäßen Luftaufbereitungsanlage;
- Figur 5: eine Draufsicht auf die Oberseite einer erfindungsgemäßen Luftaufbereitungsanlage;
- Figur 6: eine Schnittansicht entlang der in Figur 5 mit AA gekennzeichneten Schnittlinie;
- Figur 7: eine Explosionsdarstellung von in einem Gehäuse eines erfindungsgemäßen Ölabscheiders angeordneten Komponenten;
- Figur 8: eine perspektivische Darstellung von in einem Gehäuse eines erfindungsgemäßen Ölabscheiders angeordneten Komponenten;
- Figur 9: eine perspektivische Darstellung eines Luftleitelementes zur Verwendung in einem erfindungsgemäßen Ölabscheider;
- Figur 10: eine Draufsicht auf einen Einsatz eines erfindungsgemäßen Ölabscheiders;
- Figur 11: eine Schnittansicht entlang der in Figur 10 mit BB gekennzeichneten Schnittlinie;
- Figur 12: eine perspektivische Darstellung eines Gehäuses eines erfindungsgemäßen Ölabscheiders;
- Figur 13: eine weitere perspektivische Darstellung eines Gehäuses eines erfindungsgemäßen Ölabscheiders;
- Figur 14: eine perspektivische Darstellung eines erfindungsgemäßen Ölabscheiders;
- Figur 15: eine weitere perspektivische Darstellung eines erfindungsgemäßen Ölabscheiders; und
- Figur 16: eine schematische Darstellung einer erfindungsgemäßen Druckluftversorgungsanlage.

Bei der nachfolgenden detaillierten Beschreibung der Erfindung anhand der beigefügten Zeichnungen bezeichnen gleiche Bezugszeichen gleiche oder vergleichbare Komponenten.

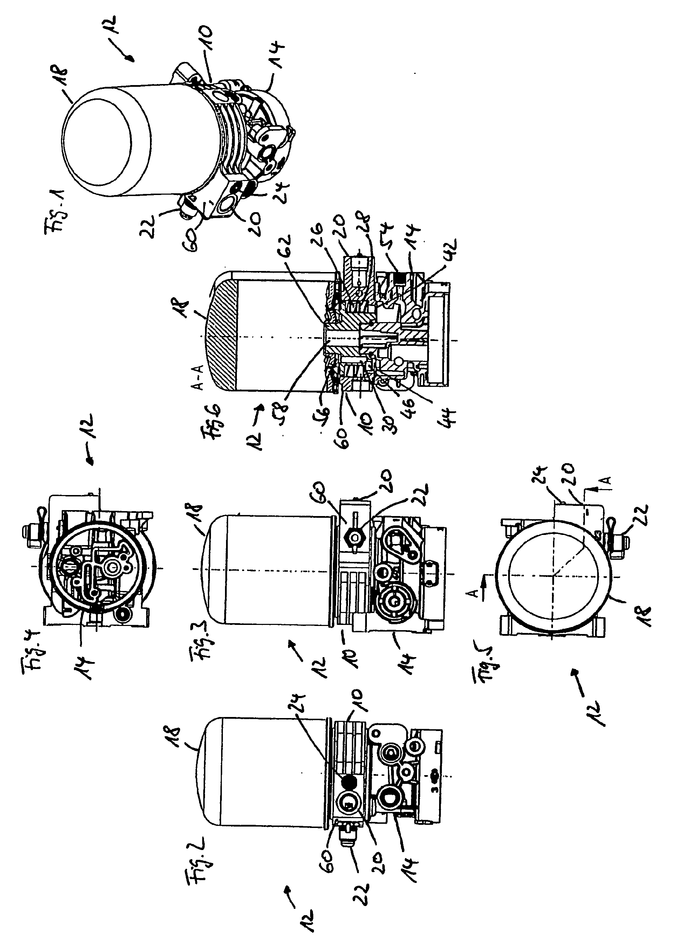

Figur 1 zeigt eine perspektivische Darstellung einer erfindungsgemäßen Luftaufbereitungsanlage. Figur 2 zeigt eine Seitenansicht einer erfindungsgemäßen Luftaufbereitungsanlage. Figur 3 zeigt eine weitere Seitenansicht einer erfindungsgemäßen Luftaufbereitungsanlage. Figur 4 zeigt eine Draufsicht auf die Unterseite einer erfindungsgemäßen Luftaufbereitungsanlage. Figur 5 zeigt eine Draufsicht auf die Oberseite einer erfindungsgemäßen Luftaufbereitungsanlage. Figur 6 zeigt eine Schnittansicht entlang der in Figur 5 mit AA gekennzeichneten Schnittlinie. Die erfindungsgemäße Luftaufbereitungsanlage 12 umfasst eine als Trocknerkartusche ausgebildete Filtereinheit 18, ein Ventilgehäuse 14 und einen sandwichartig zwischen der Filtereinheit 18 und dem Ventilgehäuse 14 angeordneten Ölabscheider 10. Die genannten Komponenten der Luftaufbereitungsanlage 12 weisen Schnittstellen auf, die die dargestellte und beschriebene Kopplung der Komponenten ermöglichen. Insbesondere weist
der Ölabscheider 10 eine Schnittstelle zur Kopplung mit der Filtereinheit 18 und eine Schnittstelle zur Kopplung mit dem Ventilgehäuse 14 auf. Das Ventilgehäuse 14 hat eine weitere dem Ölabscheider 10 abgewandte Schnittstelle, die in Figur 4 erkennbar ist. Der Ölabscheider 10 hat einen Eingangsanschluss 20, über den dem Ölabscheider 10 und damit der Luftaufbereitungsanlage 12 Druckluft von einem Kompressor zuführbar ist. Im Betrieb der Luftaufbereitungsanlage 12 ersetzt dieser am Ölabscheider 10 angeordnete Eingangsanschluss 20 einen am Ventilgehäuse 14 angeordneten Eingangsanschluss 54. Bei Luftaufbereitungsanlagen des Standes der Technik ist die Filtereinheit 18 direkt mit dem Ventilgehäuse 14 ohne Zwischenschaltung eines Ölabscheiders 20 gekoppelt. Insofern ist es erforderlich, am Ventilgehäuse 14 einen Eingangsanschluss 54 zur Verfügung zu stellen. Nun, da erfindungsgemäß ein Ölabscheider 10 zwischen der Filtereinheit 18 und dem Ventilgehäuse 14 angeordnet ist, kann der Ölabscheider 10 mit einem Eingangsanschluss 20 ausgestattet werden, um dem Ölabscheider 10 die zu reinigende Druckluft auf kürzestem Weg zuzuführen. An dem Ölabscheider 10 ist ein weiterer Anschluss 22 vorgesehen, der als Fremdbefüllungs-Eingangsanschluss sowie als Reifenbefüllungs-Ausgangsanschluss verwendet werden kann. Diesem kann von einer beispielsweise fahrzeugexternen Quelle zu reinigende Druckluft zugeführt oder ungereinigte Druckluft für beliebige Zwecke, beispielsweise für die Reifenbefüllung, entnommen werden. Ferner ist ein Sicherheitsventil 24 vorgesehen. Im Inneren des Ölabscheiders 10 sind ein erster Raum 26 und ein zweiter Raum 30 vorgesehen, die über Rohre 46 miteinander in Verbindung stehen. In dem ersten Raum 26 sind Luftleitmittel 28 angeordnet, deren Gestaltung und Wirkungsweise mit Bezug auf nachfolgend beschriebene Zeichnungen näher erläutert wird. Der Ölabscheider 10 umfasst somit die Hauptkomponenten eines äußeren Gehäuses 60, eines Einsatzes 62 und auf dem Einsatz 62 in dem Gehäuse 60 angeordneter Luftleitmittel 28.

Im Betrieb der Luftaufbereitungsanlage 12 wird dem Ölabscheider 10 über den Eingangsanschluss 20 Druckluft zugeführt. Die Druckluft gelangt zunächst in den ersten Raum 26 des Ölabscheiders 10, wobei der Luft sogleich beim Einströmen in den ersten Raum 26 eine tangentiale Strömungskomponente vermittelt wird. Durch die Zentrifugalkraft werden Verschmutzungen zur Innenwand des Gehäuses 60 getrieben. Die Verschmutzungen sammeln sich dann im Bodenbereich 42 des ersten Raums 26. Im Bodenbereich 42 des ersten Raums 26 ist ein Ablass 44 zur Entnahme der abgeschiedenen Verschmutzungen vorgesehen. Die Druckluft kann aus dem ersten Raum 26 über die Rohre 46 in den zweiten Raum 30 überströmen, von wo sie über Auslassöffnungen 56 in die Filtereinheit 18 eintreten kann. Nach Trocknung der Druckluft in der Filtereinheit 18 strömt diese über einen zentralen Strömungspfad 58 des Ölabscheiders 10 in die Ventileinheit 14, von wo sie auf die verschiedenen Verbraucherkreise in bekannter Weise verteilt wird.

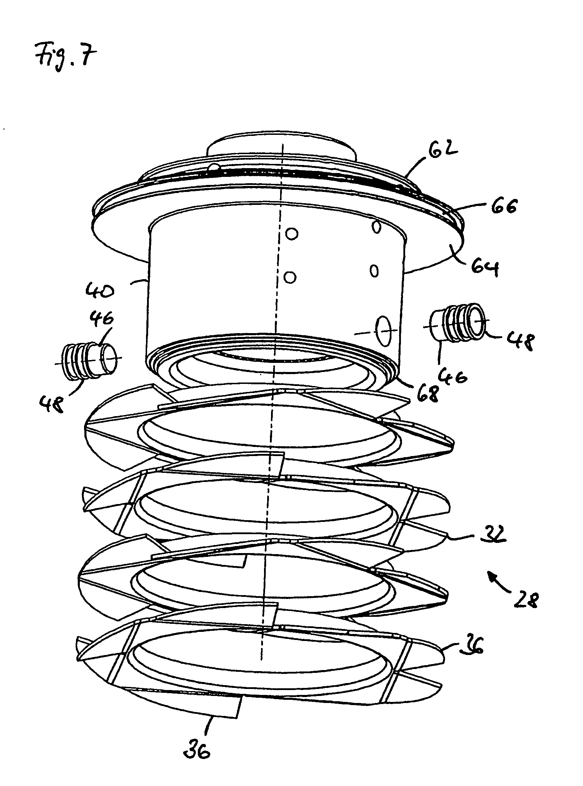

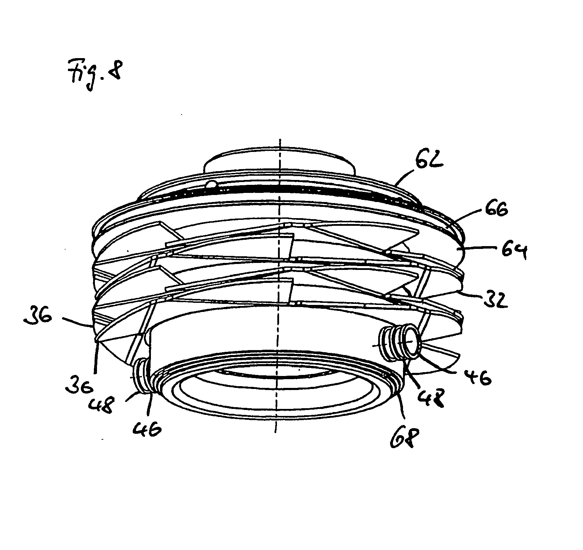

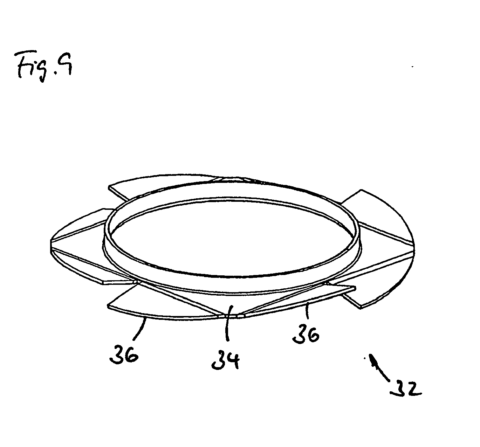

Figur 7 zeigt eine Explosionsdarstellung von in einem Gehäuse eines erfindungsgemäßen Ölabscheiders angeordneten Komponenten. Figur 8 zeigt eine perspektivische Darstellung von in einem Gehäuse eines erfindungsgemäßen Ölabscheiders angeordneten Komponenten. Figur 9 zeigt eine perspektivische Darstellung eines Luftleitelementes zur Verwendung in einem erfindungsgemäßen Ölabscheider. Der Einsatz 62 hat eine zylindrische Wand 40 und einen sich von dieser Wand 40 erstreckenden Kragen 64. Der Kragen 64 weist eine Nut 66 auf, so dass der Einsatz 62 in seinem in das Gehäuse 60
(siehe zum Beispiel Figur 6) eingesetzten Zustand den ersten Raum 26 (siehe zum Beispiel Figur 6) abdichtet. Die zylindrische Wand 40 endet an ihrem dem Kragen 64 abgewandten Ende mit einem gestuften Bereich 68. Da sich im Betrieb der Luftaufbereitungsanlage das abgeschiedene Öl im Bereich dieser gestuften Ausbildung ansammelt, hat diese die Wirkung, ein Hochkriechen des Öls an der zylindrischen Wand 40 zu verhindern. Für den Übertritt der Druckluft aus dem ersten Raum 26 (siehe zum Beispiel Figur 6) in den zweiten Raum 30 (siehe zum Beispiel Figur 6) sind Rohre 46 vorgesehen, die an ihrem äußeren Umfang kragenartige Fortsätze 48 aufweisen. Die Fortsätze 48 sind auch zu dem Zweck vorgesehen, ein Kriechen von Öl entlang des Außenumfangs der Rohre 46 zu verhindern und so letztlich einen Ölübertritt in den zweiten Raum 30 (siehe zum Beispiel Figur 6) zu unterbinden. Die Luftleitmittel 28 sind als vier identisch ausgebildete Luftleitelemente 32 realisiert. Der Innendurchmesser der Luftleitelemente 32 entspricht im Wesentlichen dem Außendurchmesser der zylindrischen Wand 40, so dass die Luftleitelemente 32 form- und/oder kraftschlüssig auf den Einsatz 26 aufgesetzt werden können. Mit jedem Luftleitelement 32 ist eine Hauptebene 34 definiert. Von dieser Hauptebene 34 erstrecken sich Luftführungsabschnitte 36 abwechselnd in unterschiedliche axiale Richtungen, wobei diese Luftführungsabschnitte vorzugsweise einen Winkel von ca. 15 Grad mit der Hauptebene 34 einschließen. Die Luftleitelemente 32 sind zwar identisch aufgebaut, jedoch werden sie in "verdrehter" Weise auf den Einsatz 62 aufgesetzt. Hierdurch liegen für die durch den ersten Raum 26 (siehe zum Beispiel Figur 6) strömende Luft unterschiedliche Strömungsquerschnitte vor, woraus variierende Geschwindigkeiten resultieren. Diese variierenden Geschwindigkeiten begünstigen ein Zusammenlagern der Verschmutzungen, so dass deren Transport an die innere Wand des Gehäuses 60 (siehe zum Beispiel Figur 6) aufgrund der Zentrifugalkraft begünstigt wird. Die Luftleitelemente 32 können in einfacher Weise hergestellt werden, beispielsweise durch einen Stanzvorgang und einen nachfolgenden Biegevorgang, wobei diese Prozesse bei geeignetem Werkzeug auch in einen einzigen Arbeitsschritt vereinigt sein können.

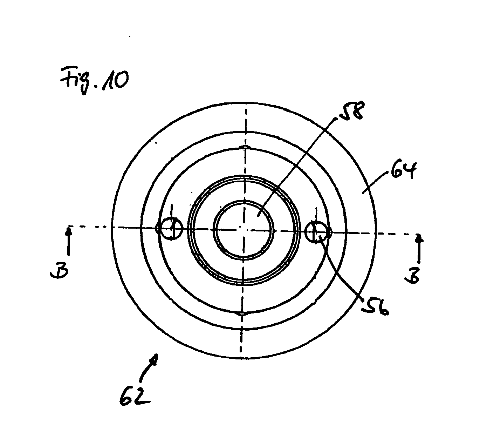

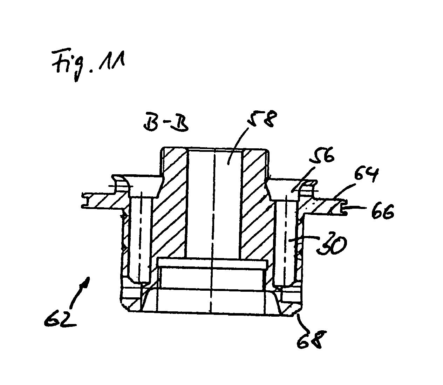

Figur 10 zeigt eine Draufsicht auf einen Einsatz 62 eines erfindungsgemäßen Ölabscheiders. Figur 11 zeigt eine Schnittansicht entlang der in Figur 10 mit BB gekennzeichneten Schnittlinie. Mann erkennt - von außen nach innen - den Kragen mit seiner Nut 26, die Auslassöffnungen 56, den zweiten Raum 30 sowie den Strömungspfad 58. Weiterhin ist der gestufte Bereich 68 des Einsatzes 62 erkennbar.

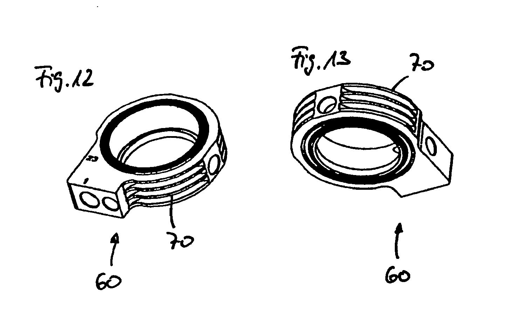

Figur 12 zeigt eine perspektivische Darstellung eines Gehäuses eines erfindungsgemäßen Ölabscheiders. Figur 13 zeigt eine weitere perspektivische Darstellung eines Gehäuses eines erfindungsgemäßen Ölabscheiders. Das äußere Gehäuse 60 des Ölabscheiders weist Kühlrippen 70 auf, die der Abfuhr von Wärme aus dem Ölabscheider dienen.

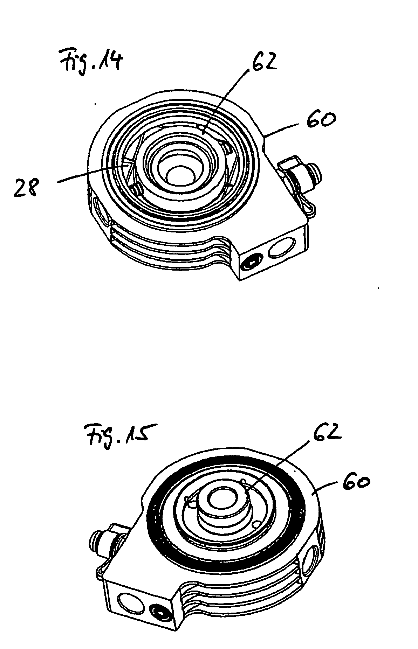

Figur 14 zeigt eine perspektivische Darstellung eines erfindungsgemäßen Ölabscheiders. Figur 15 zeigt eine weitere perspektivische Darstellung eines erfindungsgemäßen Ölabscheiders. Die Hauptkomponenten des Ölabscheiders 10, nämlich der Einsatz 62, die Luftleitmittel 28 und das äußere Gehäuse 60 sind erkennbar.

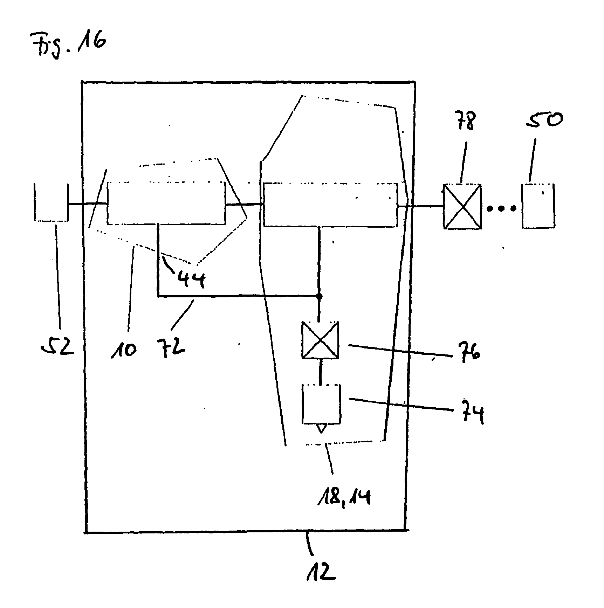

Figur 16 zeigt eine schematische Darstellung einer erfindungsgemäßen Druckluftversorgungsanlage. Die erfindungsgemäße Luftaufbereitungsanlage 12 ist aus einer herkömmlichen Luftaufbereitungsanlage mit Ventilgehäuse 14 und Filtereinheit 18 sowie einem erfindungsgemäßen Ölabscheider 10 aufgebaut. Der Luftaufbereitungsanlage 12 wird aus einer Druckluftquelle 52 über den Ölabscheider 10 Druckluft zugeführt. Die gereinigte und getrocknete Druckluft kann dann Druckluftverbrauchern 50 zugeführt werden. Um in dem Ölabscheider 10 angesammelte Verschmutzungen aus dem Ölabscheider 10 zu entnehmen, ist eine Leitung 72 vorgesehen, über die der Ablass 44 des Ölabscheiders 10 mit einer Entlüftung 74 der Luftaufbereitungsanlage 12 gekoppelt ist. Die Kopplung erfolgt über ein Ventil 76, was beispielsweise als 2/2-Ventil ausgelegt sein kann. Zur Entnahme der Verschmutzungen aus dem Ölabscheider 12 wird ein in der Verbraucherleitung angeordnetes Ventil 78, das ebenfalls als 2/2-Ventil ausgelegt sein kann, geschlossen. Dieses Ventil 78 kann auch innerhalb der Luftaufbereitungsanlage 12 angeordnet sein. Das Ventil 76 kann dann geöffnet werden, so dass durch die von der Druckluftquelle 52 gelieferte Druckluft die Verschmutzungen aus dem Ölabscheider über die Entlüftung 74 ausgestoßen werden können. Diese Entlüftung 74 ist vorzugsweise dieselbe Entlüftung, die auch zum Zwecke der Regeneration der Filtereinheit 18 verwendet wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Ölabscheider
- 12: Luftaufbereitungsanlage
- 14: Ventilgehäuse
- 16: Ausgangsanschluss
- 18: Filtereinheit
- 20: Eingangsanschluss
- 22: Ausgangsanschluss
- 24: Sicherheitsventil
- 26: erster Raum
- 28: Luftleitmittel
- 30: zweiter Raum
- 32: Luftleitelement
- 34: Hauptebene
- 36: Luftführungsabschnitt
- 38: Luftführungsabschnitt
- 40: zylindrische Wand
- 42: Bodenbereich
- 44: Ablass
- 46: Rohr
- 48: Fortsatz
- 50: Druckluftverbraucher
- 52: Druckluftquelle
- 54: Eingangsanschluss
- 56: Auslassöffnung
- 58: Strömungspfad
- 60: Gehäuse
- 62: Einsatz
- 64: Kragen
- 66: Nut
- 68: gestufter Bereich
- 70: Kühlrippen
- 72: Leitung
- 74: Entlüftung
- 76: Ventil
- 78: Ventil

## Patentansprüche

1. Ölabscheider (10) für eine Luftaufbereitungsanlage (12) eines Nutzfahrzeugs, wobei
- die Luftaufbereitungsanlage
- ein Ventilgehäuse (14) mit mindestens einem Ausgangsanschluss (16) für einen Druckluftverbraucher (50) sowie
- eine Filtereinheit (18), die insbesondere dem Trocknen der dem Druckluftverbraucher zuzuführenden Druckluft dient,
aufweist und
- der Ölabscheider eine Schnittstelle aufweist, über die er mit der Filtereinheit koppelbar ist, und der Ölabscheider (10) eine weitere Schnittstelle aufweist, über die er mit dem Ventilgehäuse (14) koppelbar ist,
wobei der Ölabscheider Mittel zum Abscheiden von Öl aus Druckluft aufweist und wobei der Ölabscheider (10) ein Sicherheitsventil (24) aufweist, **dadurch gekennzeichnet, dass** der Ölabscheider (10) einen Anschluss (22) aufweist, dem ungereinigte Druckluft entnehmbar ist.

2. Ölabscheider (10) nach Anspruch 1, **dadurch gekennzeichnet, dass** der Ölabscheider (10) sandwichartig zwischen dem Ventilgehäuse (14) und der Filtereinheit (18) anordbar ist.

3. Ölabscheider (10) nach Anspruch 1 oder 2, **dadurch gekennzeichnet, dass** der Ölabscheider (10) einen Eingangsanschluss (20) aufweist, über den eine Druckluftquelle (52) mit der Luftaufbereitungsanlage (12) koppelbar ist.

4. Ölabscheider (10) nach einem der vorhergehenden Ansprüche, **dadurch gekennzeichnet, dass** der Ölabscheider (10) einen Ausgangsanschluss (22) aufweist.

5. Ölabscheider (10) nach einem der vorhergehenden Ansprüche, **dadurch gekennzeichnet, dass** der Ölabscheider (10) einen Anschluss (22) aufweist, dem ungereinigte Druckluft, insbesondere zum Befüllen von Reifen, entnehmbar ist und dem zu reinigende Druckluft zuführbar ist.

6. Ölabscheider (10) nach einem der vorhergehenden Ansprüche, **dadurch gekennzeichnet,**
- **dass** der Ölabscheider (10) einen ersten Raum (26) aufweist, in den zu reinigende Druckluft einleitbar ist, wobei in dem ersten Raum (26) Luftleitmittel (28) angeordnet sind, durch die die Strömungsgeschwindigkeit der durchströmenden Luft änderbar ist, und
- **dass** der Ölabscheider (10) einen zweiten Raum (30) aufweist, dem in dem ersten Raum (26) gereinigte Luft zuführbar ist und über den die gereinigte Luft der Filtereinheit (18) zuführbar ist.

7. Ölabscheider (10) nach Anspruch 6, **dadurch gekennzeichnet, dass** der erste Raum (26) und der zweite Raum (30) als im Wesentlichen axialsymmetrische Ringräume mit gemeinsamer Achse ausgelegt sind.

8. Ölabscheider (10) nach Anspruch 7, **dadurch gekennzeichnet, dass** die Druckluft dem ersten Raum (26) mit tangentialer Komponente zuführbar ist.

9. Ölabscheider (10) nach Anspruch 7 oder 8, **dadurch gekennzeichnet,**
- **dass** die Luftleitmittel (28) mehrere Luftleitelemente (32) aufweisen, deren Hauptebenen (34) an verschiedenen Axialkoordinaten angeordnet sind,
- **dass** die Luftleitelemente Luftführungsabschnitte (36, 38) aufweisen, die sich aus deren jeweiliger Hauptebene (34) heraus erstrecken, und
- **dass** benachbarte Luftführungsabschnitte (36 38) benachbarter Luftleitelemente (32) nicht parallel sind.

10. Ölabscheider (10) nach Anspruch 9, **dadurch gekennzeichnet, dass** der Winkel zwischen Luftführungsabschnitten (36, 38) und Hauptebenen (34) zwischen 10 und 20 Grad, vorzugsweise 15 Grad beträgt.

11. Ölabscheider (10) nach Anspruch 9 oder 10, **dadurch gekennzeichnet, dass** die Luftleitelemente (32) zumindest teilweise identisch ausgebildet sind, wobei die Nichtparallelität der Luftführungsabschnitte (36, 38) benachbarter Luftleitelemente (32) durch eine relative Verdrehung der Luftleitelemente gegeneinander realisiert ist.

12. Ölabscheider (10) nach einem der Ansprüche 9 bis 11, **dadurch gekennzeichnet, dass** der Innendurchmesser der Luftleitelemente (32) dem Außendurchmesser einer im Wesentlichen zylindrischen Wand (40) entspricht, die den ersten Raum (26) von dem zweiten Raum (30) trennt.

13. Ölabscheider (10) nach einem der Ansprüche 6 bis 12, **dadurch gekennzeichnet, dass** der erste Raum (26) einen Bodenbereich (42) aufweist, in dem abgeschiedenes Öl gesammelt wird und an dem ein Ablass (44) zur Entnahme des gesammelten Öls angeordnet ist.

14. Ölabscheider (10) nach Anspruch 13, **dadurch gekennzeichnet, dass** die im Wesentlichen zylindrische Wand (40) im Bodenbereich (42) des ersten Raums (26) gestuft ausgebildet ist.

15. Ölabscheider (10) nach einem der Ansprüche 6 bis 14, **dadurch gekennzeichnet, dass** der Übergang zwischen dem ersten Raum (26) und dem zweiten Raum (30) durch mindestens ein in den ersten Raum hineinragendes Rohr (46) gebildet ist, das an seiner Außenseite mindestens einen kragenartigen Fortsatz (48) hat.

16. Luftaufbereitungsanlage (12) mit einem Ölabscheider (10) nach einem der vorangehenden Ansprüche.

17. Druckluftversorgungsanlage mit einer Luftaufbereitungsanlage (12) nach Anspruch 16.

18. Druckluftversorgungsanlage nach Anspruch 17, **dadurch gekennzeichnet, dass** der Ölabscheider einen Ablass 44 aufweist, der zum Abführen von abgeschiedenen Substanzen mit einer Ablassöffnung des Ventilgehäuses (14) gekoppelt ist.

## Claims

1. Oil separator (10) for an air conditioning system (12) of a commercial vehicle, wherein
- said air conditioning system comprises
- a valve housing (14) with at least one outlet connector (16) for a compressed-air load (50) as well as
- a filter unit (18) serving, in particular, to dry the compressed air to be supplied to said compressed-air load, and
- the oil separator comprises an interface via which it can be coupled to said filter unit, and the oil separator (10) comprises a further interface via which it can be coupled to said valve housing (14),
wherein the oil separator comprises means for separating oil from compressed air and
wherein the oil separator (10) comprises a safety valve (24), **characterised in that** the oil separator (10) comprises a connector (22) from which non-purified air can be retrieved.

2. Oil separator (10) according to Claim 1, **characterised in that** he oil separator (10) is adapted to be disposed in a sandwich-like form between said valve housing (14) and said filter unit (18).

3. Oil separator (10) according to Claim 1 or 2, **characterised in that** the oil separator (10) comprises an inlet connector (20) via which a compressed-air source (52) can be coupled to said air conditioning system (12).

4. Oil separator (10) according to any of the preceding Claims, **characterised in that** the oil separator (10) comprises an outlet connector (22).

5. Oil separator (10) according to any of the preceding Claims, **characterised in that** the oil separator (10) comprises a connector (22) from which non-purified compressed air, in particular air for filling tyres, can be tapped and which can be supplied with compressed air to be purified.

6. Oil separator (10) according to any of the preceding Claims, **characterised in**
- **that** the oil separator (10) comprises a first compartment (26) into which compressed air to be purified can be introduced, with air-guiding means (28) being disposed in said first compartment (26) by means of which the flow rate of the air flowing therethrough can be changed, and
- **that** the oil separator (10) comprises a second compartment (30) which can be supplied with air purified in said first compartment (26) and via which the purified air can be supplied to said filter unit (18).

7. Oil separator (10) according to Claim 6, **characterised in that** said first compartment (26) and said second compartment (30) are designed as substantially axially symmetrical annular spaces having a common axis.

8. Oil separator (10) according to Claim 7, **characterised in that** the compressed air in said first compartment (26) can be supplied with a tangential component.

9. Oil separator (10) according to Claim 7 or 8, **characterised in**
- **that** said air-guiding means (28) include a plurality of air-guiding elements (32) whose principal planes (34) are arranged at different axial coordinates,
- **that** said air-guiding elements include air-guiding sections (36, 38) extending out of their respective principal plane (34), and
- **that** adjacent air-guiding sections (36, 38) of adjacent air-guiding elements (32) are not parallel.

10. Oil separator (10) according to Claim 9, **characterised in that** the angle between air-guiding sections (36, 38) and principal planes (34) ranges between 10 and 20 degrees, preferably at 15 degrees.

11. Oil separator (10) according to Claim 9 or 10, **characterised in that** said air-guiding elements (32) have an identical configuration, at least in parts, with the non-parallelism of said air-guiding sections (36, 38) of adjacent air-guiding elements (32) being realised by a rotation of said air-guiding elements relative to one another.

12. Oil separator (10) according to any of the Claims 9 to 11, **characterised in that** the interior diameter of said air-guiding elements (32) corresponds to the exterior diameter of a substantially cylindrical wall (40) that separates said first compartment (26) from said second compartment (30).

13. Oil separator (10) according to any of the Claims 6 to 12, **characterised in that** said first compartment (26) comprises a bottom region (42) where separated oil is collected and where a drain (44) is provided for withdrawal of the collected oil.

14. Oil separator (10) according to Claim 13, **characterised in that** said substantially cylindrical wall (40) is formed in the bottom region (42) of said first compartment (26) in a stepped design.

15. Oil separator (10) according to any of the Claims 6 to 14, **characterised in that** the transition between said first compartment (26) and said second compartment (30) is formed by at least one tube (46) projecting into said first compartment, which tube presents at least one collar-like extension (48) on its outside.

16. Air-conditioning system (12) including an oil separator (10) according to any of the preceding Claims.

17. Compressed-air supply system including an air-conditioning system (12) according to Claim 16.

18. Compressed-air supply system according to Claim 17, **characterised in that** said oil separator comprises a drain (44) that is coupled to a drain opening of said valve housing (14) for the elimination of separated substances.

## Revendications

1. Séparateur (10) d'huile pour une installation (12) de préparation d'air d'un véhicule utilitaire, dans lequel
- l'installation de préparation d'air a
- un corps (14) de vanne ayant au moins un raccord (16) de sortie pour un utilisateur (50) d'air comprimé ainsi que
- une unité (18) de filtration, qui sert notamment à la déshydratation de l'air comprimé allant à l'utilisateur d'air comprimé,
et
- le séparateur d'huile a une interface par laquelle il peut être accouplé avec l'unité de filtration et le séparateur (10) d'huile a une autre interface par laquelle il peut être accouplé au corps (14) de la vanne,
le séparateur d'huile ayant des moyens de séparation de l'huile de l'air comprimé,
dans lequel le séparateur (10) d'huile a une soupape (24) de sûreté, **caractérisé en ce que** le séparateur (10) d'huile a un raccord (22) duquel de l'air comprimé non épuré peut être prélevé.

2. Séparateur (10) d'huile suivant la revendication 1, **caractérisé en ce que** le séparateur (10) d'huile peut être disposé en sandwich entre le corps (14) de la vanne et l'unité (18) de filtration.

3. Séparateur (10) d'huile suivant la revendication 1 ou 2, **caractérisé en ce que** le séparateur (10) d'huile a un raccord (20) d'entrée, par lequel une source (52) d'air comprimé peut être reliée à l'installation (12) de préparation d'air.

4. Séparateur (10) d'huile suivant l'une des revendications précédentes, **caractérisé en ce que** le séparateur (10) d'air a un raccord (22) de sortie.

5. Séparateur (10) d'huile suivant l'une des revendications précédentes, **caractérisé en ce que** le séparateur (10) d'air a un raccord (22) duquel de l'air comprimé non épuré, notamment pour le gonflage de pneumatiques, peut être prélevé et auquel de l'air comprimé à épurer peut être envoyé.

6. Séparateur (10) d'huile suivant l'une des revendications précédentes, **caractérisé**
- **en ce que** le séparateur (10) d'huile a une première chambre (26) dans laquelle de l'air comprimé à épurer peut être introduit, des moyens (28) de conduite de l'air, par lesquels la vitesse d'écoulement de l'air qui passe peut être modifiée, étant montés dans la première chambre (26), et
- **en ce que** le séparateur (10) d'huile a une deuxième chambre (30) à laquelle de l'air épuré dans la première chambre (26) peut être envoyé et par laquelle l'air épuré peut être envoyé à l'unité (18) de filtration.

7. Séparateur (10) d'huile suivant la revendication 6, **caractérisé en ce que** la première chambre (26) et la deuxième chambre (30) sont conçues sous la forme de chambres annulaires, sensiblement de symétrie axiale et d'axe commun.

8. Séparateur (10) d'huile suivant la revendication 7, **caractérisé en ce que** l'air comprimé peut être envoyé à la première chambre (26) en ayant une composante tangentielle.

9. Séparateur (10) d'huile suivant la revendication 7 ou 8, **caractérisé**
- **en ce que** les moyens (28) de conduite d'air ont plusieurs éléments (32) de conduite d'air, dont les plans (34) principaux sont disposés en des coordonnées axiales différentes,
- **en ce que** les éléments de conduite d'air ont des tronçons (36, 38) de conduite d'air, qui s'étendent hors de leur plan (34) principal respectif, et
- **en ce que** des tronçons (36, 38) de conduite d'air voisins d'éléments (32) de conduite d'air voisins ne sont pas parallèles.

10. Séparateur (10) d'huile suivant la revendication 9, **caractérisé en ce que** l'angle entre des tronçons (36, 38) de conduite d'air et des plans (34) principaux est compris entre 10 et 20° en étant, de préférence, de 15°.

11. Séparateur (10) d'huile suivant la revendication 9 ou 10, caractérisé les éléments (32) de conduite d'air sont constitués de manière identique au moins en partie, le non parallélisme des tronçons (36, 38) de conduite d'air d'éléments (32) de conduite d'air voisins étant réalisé par une torsion relative des éléments de conduite d'air l'un par rapport à l'autre.

12. Séparateur (10) d'huile suivant l'une des revendications 9 à 11, **caractérisé en ce que** le diamètre intérieur des éléments (32) de conduite d'air correspond au diamètre extérieur d'une paroi (40) sensiblement cylindrique qui sépare la première chambre (26) de la deuxième chambre (30).

13. Séparateur (10) d'huile suivant l'une des revendications 6 à 12, caractérisé en ce la première chambre (26) a une zone (42) de fond dans laquelle de l'huile séparée est accumulée et sur laquelle est prévue une sortie (44) pour l'évacuation de l'huile accumulée.

14. Séparateur (10) d'huile suivant là revendication 13, **caractérisé en ce que** la paroi (40) sensiblement cylindrique est constituée de manière étagée dans la partie (42) de fond de la première chambre (26).

15. Séparateur (10) d'huile suivant l'une des revendications 6 à 14, **caractérisé en ce que** la transition entre la première chambre (26) et la deuxième chambre (30) est formée par au moins un tuyau (46) pénétrant dans la première chambre et ayant sur son côté extérieur au moins un prolongement (48) de filtre en collet.

16. Installation (12) de préparation d'air ayant un séparateur (10) d'huile suivant l'une des revendications précédentes.

17. Installation d'alimentation en air comprimé ayant une installation (12) de préparation d'air suivant la revendication 16.

18. Installation d'alimentation en air comprimé suivant la revendication 17, **caractérisée en ce que** le séparateur d'huile a une sortie (44) qui pour l'évacuation de substances séparées, communique avec une ouverture de sortie du corps (14) de la vanne.
